# EUROPEAN PATENT APPLICATION

(11) **EP 4 822 847 A1**
(43) Date of publication of application: **14.10.2026**
(21) Application number: 24913514.6
(22) Date of filing: 23.12.2024
(51) Int. Cl.: H01M 50/24, H01M 50/262, H01M 50/204

(54) **SEALING STRUCTURE OF BATTERY PACK CASE**

(30) Priority: 29.12.2023 KR 20230197776; 28.02.2024 KR 20240029097
(71) Applicant: Valeo Kapec Co., Ltd., Daegu 42709 (KR)
(72) Inventor: PARK, Sehyeon, Daegu 42709 (KR); LEE, Seongeun, Daegu 42709 (KR)
(74) Representative: Isarpatent
(86) International application number: PCT/KR2024/020968
(87) International publication number: WO 2025/143721

(57) **Abstract**

The present invention provides a battery pack including: an upper case; a lower case fastened to the upper case; a sealing member that has a closed curve shape, is interposed between an edge portion of the upper case and an edge portion of the lower case, and seals the upper case and the lower case therebetween; and a fastening member that fastens the edge portion of the upper case and the edge portion of the lower case. The fastening member includes a coupling protrusion further protruding toward the upper case with respect to the edge portion of the lower case, and the sealing member has a coupling hole into which the coupling protrusion is fitted.

## Description

### [Technical Field]

This application claims priority to and the benefit of Korean Patent Application No. 10-2023-0197776 filed at the Korean Intellectual Property Office on December 29, 2023, and Korean Patent Application No. 10-2024-0029097 filed at the Korean Intellectual Property Office on February 28, 2024, the entire contents of which are incorporated herein by reference.

The present invention relates to a sealing structure of a battery pack case, and more specifically, to a structure capable of simply and firmly sealing and fixing a lower case and an upper case of a battery pack with a sealing member interposed therebetween.

### [Background Art]

A secondary battery is a rechargeable battery, and due to its high energy density and various application possibilities, it is used in portable devices, automobiles, and power storage systems that require a power supply.

The secondary battery includes, as its basic unit, battery cells having various structures, such as cylindrical, prismatic, and pouch types. Such battery cells may be embedded in a device either individually or in the form of a plurality of connected cells. In particular, electric vehicles and hybrid vehicles are vehicles that use electric power as a drive source thereof, and since they require high output and capacity, it is common for such vehicles to incorporate a battery module or a battery pack in which a plurality of battery cells are integrated.

A typical battery pack includes a case in which a plurality of battery cells or battery modules are integrated and accommodated. In particular, as a structure of such a case, one in which an upper case and a lower case are coupled is widely used.

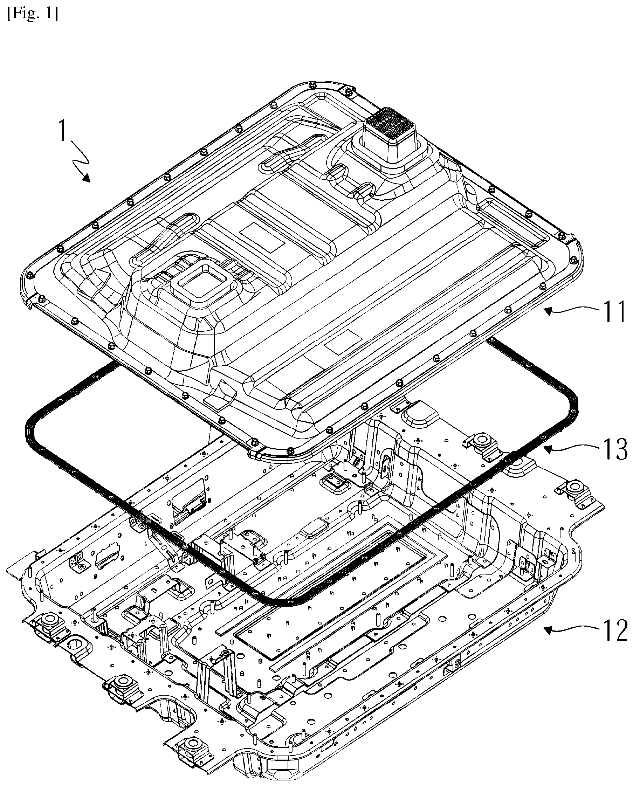

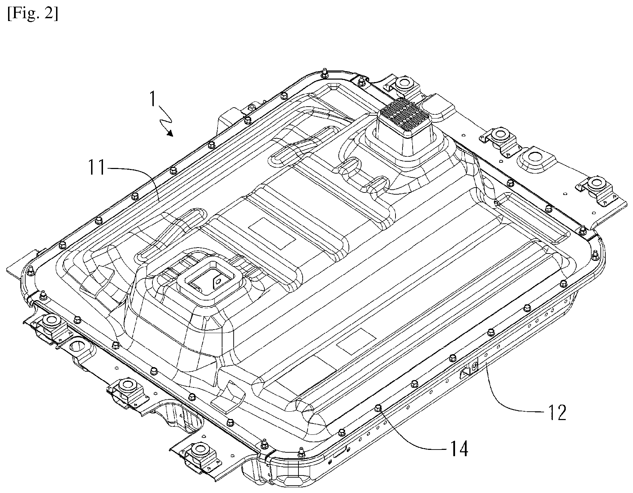

FIGS. 1 and 2 illustrate a structure of a battery pack of the related art. Referring to these drawings, a battery pack 1 of the related art is configured with a battery cell or a battery module accommodated in an upper case 11 and a lower case 12. In this case, it is common for the upper case 11 and the lower case 12 to have a sealing member 13 interposed therebetween for sealing therebetween to ensure watertightness and the like between the inside and outside thereof. The sealing member 13 includes a gasket made of a compressible material, and is pressed into close contact between the upper case 11 and the lower case 12 by fastening members 14 for fastening the cases 11 and 12.

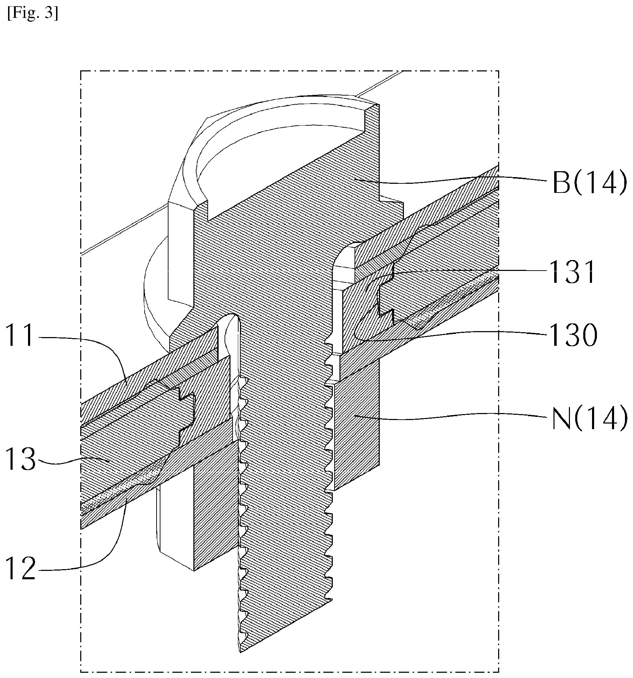

FIG. 3 illustrates a cross-section of the battery pack of FIG. 1. Referring to FIG. 3, the fastening member 14 includes a bolt B passing through the upper case 11 and the lower case 12, and a nut N engaged with the bolt B. In this case, the sealing member 13 includes a coupling hole 130 and an annular fastening member 131 fitted into the coupling hole 130, and a position of the sealing member 13 is restricted as the bolt B passes through the fastening member 131.

In order to assemble the battery pack 1 having such a structure, the bolt B should be inserted so as to simultaneously pass through the cases 11 and 12 and the fastening member 131 in a state in which the sealing member 13 and the upper case 11 are aligned on the lower case 12 so as to appropriately overlap each other. Such a fastening process should be performed in a balanced manner at a plurality of locations arranged along a circumferential direction of edge portions of the cases 11 and 12.

In addition, in the coupling structure of the related art as described above, since a process of mounting the fastening member 131 on the sealing member 13 should precede the fastening process as described above, manufacture of the sealing member 13 is complicated and the unit cost thereof is significantly increased.

That is, the battery pack 1 having such a structure is very troublesome and inconvenient to assemble, requires an excessively large number of parts and processes, and is also expensive to manufacture.

Furthermore, such a sealing structure is disadvantageous in terms of ensuring watertightness of the battery pack 1. For example, if the fastening member 131 is not accurately centered with the bolt B and the nut N, a compressive force acts unevenly around the bolt B, and a portion to which the compressive force acts to a lesser extent has relatively poor watertightness.

Accordingly, there is an urgent need for a sealing structure of a battery pack case that can be assembled easily, facilitates alignment, and can ensure sufficient watertightness.

### [Disclosure]

### [Technical Problem]

The present invention has been made in view of the circumstances of the related art, and an object thereof is to provide a structure of a battery pack with improved sealing performance between the inside and outside of a case.

Another technical object of the present invention is to provide a structure of a battery pack capable of achieving fastening and sealing of a case through a simple process.

To this end, the present invention is intended to provide a sealing structure of a battery pack in which a sealing member can be easily mounted at a precise position.

In addition, the present invention is intended to provide a structure of a battery pack in which sufficient sealing performance is ensured while requiring fewer parts and less material.

The technical problems of the present invention are not limited to the objects described above, and other objects and advantages of the present invention that are not described above can be understood by the following description and will be more clearly understood by the embodiments of the present invention. In addition, it will be readily understood that the objects and advantages of the present invention can be realized by means set forth in the claims and combinations thereof.

### [Technical Solution]

The present invention may be applied to a battery pack in which a sealing member is interposed between a first coupling surface of a first case and a second coupling surface of a second case, and the sealing member is compressed by fastening the first case and the second case such that the first coupling surface and the second coupling surface are brought into close contact with each other.

The first case and the second case may be fastened to each other by a fastening member.

The first case may include a first edge portion provided with the first coupling surface.

The second case may include a second edge portion provided with the second coupling surface.

The sealing member may be interposed under compression between the first coupling surface and the second coupling surface facing each other, and may seal a coupling portion between the first edge portion and the second edge portion.

The fastening member may fasten the first edge portion and the second edge portion in a direction in which the first edge portion and the second edge portion are brought into close contact with each other.

The fastening member includes a bolt and a nut engaged with each other.

The fastening member further includes a coupling protrusion.

The coupling protrusion is arranged on the first coupling surface side, is fixed to the first edge portion, and protrudes from the first coupling surface.

The coupling protrusion may be formed as one member with the first edge portion. Either the nut or the bolt may be formed as one member with the first edge portion.

The coupling protrusion may be formed as one member with a first fastening member, which is either the nut or the bolt.

The coupling protrusion may be connected to a first fastening member, which is either the nut or the bolt, through a first hole of the first edge portion.

A second fastening member, which is the other of the nut and the bolt, may be fastened to the first fastening member.

A cross-section defined by an outer periphery of the coupling protrusion may be larger than a cross-section defined by an inner periphery of the first hole.

A cross-section defined by an outer periphery of the first fastening member may be smaller than a cross-section defined by an inner periphery of the first hole.

The coupling protrusion and the first fastening member may be connected to each other by a connecting portion passing through the first hole.

The connecting portion may include a fixing portion arranged between a first rear surface of the first edge portion opposite to the first coupling surface and the first fastening member, and expanding radially outward.

A cross-section defined by an outer periphery of the fixing portion may be larger than a cross-section defined by an inner periphery of the first hole.

The fixing portion may be defined by an axially compressed and deformed portion of a connecting portion section arranged between the nut and the first edge portion.

The sealing member includes a coupling hole into which the coupling protrusion is fitted, the coupling hole having an inner peripheral surface in contact with an outer peripheral surface of the coupling protrusion.

The sealing member may be easily mounted at a precise position on the first edge portion of the first case by being fitted to the coupling protrusion.

A fastening member according to a specific implementation includes a coupling protrusion fixed to the first edge portion, arranged on the first coupling surface side so as to protrude from the first coupling surface, and aligned with a first hole of the first edge portion, a nut fixed to the first edge portion and aligned with the first hole, and a bolt passing through the coupling protrusion and the first hole and engaged with the nut.

The nut may be arranged on the first rear surface side, and the coupling protrusion may be connected to the nut through the first hole.

A cross-section defined by an outer periphery of the coupling protrusion may be larger than a cross-section defined by an inner periphery of the first hole.

A cross-section defined by an outer periphery of the nut may be smaller than a cross-section defined by an inner periphery of the first hole.

The nut and the coupling protrusion may be connected to each other by a connecting portion passing through the first hole.

The connecting portion may include a fixing portion arranged between the first rear surface of the first edge portion and the nut and expanding radially outward.

A cross-section defined by an outer periphery of the fixing portion may be larger than a cross-section defined by an inner periphery of the first hole.

The fixing portion may be defined by an axially compressed and deformed portion of a connecting portion section arranged between the nut and the first edge portion.

The bolt may pass through a second hole of the second edge portion, and a head of the bolt may be arranged on a second rear surface side of the second edge portion opposite to the second coupling surface.

A fastening member according to another specific implementation may include a coupling protrusion fixed to the first edge portion and arranged on the first coupling surface side so as to protrude from the first coupling surface, a bolt fixed to the first edge portion, aligned with the coupling protrusion, and passing through a second hole of the second edge portion, and a nut arranged on a second rear surface side of the second edge portion opposite to the second coupling surface and engaged with the bolt.

A head of the bolt may be arranged on the first rear surface side, and the coupling protrusion may be connected to the head of the bolt through the first hole.

A cross-section defined by an outer periphery of the coupling protrusion may be larger than a cross-section defined by an inner periphery of the first hole.

A cross-section defined by an outer periphery of the head may be smaller than a cross-section defined by an inner periphery of the first hole.

The head and the coupling protrusion may be connected to each other by a connecting portion passing through the first hole.

The connecting portion may include a fixing portion arranged between the first rear surface of the first edge portion and the head and expanding radially outward.

A cross-section defined by an outer periphery of the fixing portion may be larger than a cross-section defined by an inner periphery of the first hole.

The fixing portion may be defined by an axially compressed and deformed portion of a connecting portion section arranged between the nut and the first edge portion.

The bolt may pass through the first hole of the first edge portion and the coupling protrusion.

Meanwhile, the sealing member may include a first sealing rib protruding from at least one of a first surface facing the first coupling surface and a second surface facing the second coupling surface and extending along a longitudinal direction of the sealing member.

The sealing member may include a second sealing rib protruding from at least one of the first surface and the second surface and extending in a closed-loop form along a periphery of the coupling hole.

An end portion of the first sealing rib in a longitudinal direction may be connected to the second sealing rib.

The first sealing rib may be provided in plurality, and the plurality of first sealing ribs may be arranged spaced apart from each other in a width direction of the sealing member.

The second sealing rib may be provided in plurality, and the plurality of second sealing ribs may be arranged radially spaced apart from each other while being concentric with each other.

In the sealing member, a width of a portion at which the coupling hole is provided may be greater than that of a remaining portion.

In one implementation, the first case may be a lower case, and the second case may be an upper case configured to cover an open upper portion of the lower case.

The fastening member may include a nut provided at an edge portion of the lower case, and a bolt passing through an edge portion of the upper case and engaged with the nut. In this case, the coupling protrusion may be included in the nut.

Despite its name, the nut may be formed as one member with the lower case, or may be fixed to the edge portion of the lower case as a separate member.

The nut may include a fixing portion with the lower case interposed between the fixing portion and the coupling protrusion. For example, the nut may have a pop-nut structure. In this case, the fixing portion may be formed by compression deformation of a connecting portion passing through the lower case.

By the nut being fixed to the lower case, the coupling protrusion may also be fixed at a precise position on the edge portion of the lower case, and the sealing member may also be mounted at a precise position.

The fastening member may include a bolt provided at an edge portion of the lower case so as to pass through the upper case, and a nut engaged with the bolt. In this case, the coupling protrusion may be included in the bolt.

Despite its name, the bolt may be formed as one member with the lower case, or may be fixed to the edge portion of the lower case as a separate member.

The bolt may include a fixing portion with the lower case interposed between the fixing portion and the coupling protrusion. For example, the bolt may have a pop-bolt structure. In this case, the fixing portion may be formed by compression deformation of a connecting portion passing through the lower case.

By the bolt being fixed to the lower case, the coupling protrusion may also be fixed at a precise position on the edge portion of the lower case, and the sealing member may also be mounted at a precise position.

The sealing member may include a first sealing rib extending with a predetermined width along an extension direction thereof and protruding in one or both directions of a thickness direction thereof. In this case, the first sealing rib may be compressed while being in direct contact with the upper case and/or the lower case. As the first sealing rib is provided, the sealing member may be pressed over a smaller area and thus may be compressed under a higher pressure for the same fastening force, thereby more strongly sealing the upper case and the lower case therebetween.

The sealing member may include a second sealing rib extending with a predetermined width along a periphery of the coupling hole and protruding in one or both directions of a thickness direction thereof. In this case, the second sealing rib may be compressed while being in direct contact with the upper case and/or the lower case. As the second sealing rib is provided, the sealing member may be pressed over a smaller area and thus may be compressed under a higher pressure for the same fastening force. Accordingly, the second sealing rib may improve sealing performance of the battery pack by sealing the upper case and the lower case therebetween and, at the same time, sealing a fastening portion through which the fastening member passes.

The first sealing rib and/or the second sealing rib may include a tapered shape having a width that decreases toward an outer side in the thickness direction, and thus may be formed to be pressed over a narrower area.

The first sealing rib and/or the second sealing rib may be provided in plurality. Accordingly, sealing between the upper case and the lower case may be achieved in a multiple and stable manner.

In the sealing member, it is preferable that a width of a portion at which the coupling hole is provided is greater than that of the remaining portion. Since it is not necessary for the sealing member to have a large width at a portion at which the coupling hole is not provided, unnecessary consumption of material may be reduced.

### [Advantageous Effects]

The present invention may provide a structure of a battery pack in which the inside and outside are completely sealed by a sealing member compressed between a first case and a second case (an upper case and a lower case) by a fastening member.

According to the present invention, a mounting position of the sealing member is accurately guided and restricted by a coupling protrusion, so that a structure of a battery pack that is easy to assemble is provided.

Another advantage of the present invention is to provide a structure of a battery pack in which sealing and fastening of cases are achieved using a minimum amount of material and a minimum number of parts.

In addition to the effects described above, specific effects of the present invention will be described below together with specific matters for implementing the invention.

### [Brief Description of Drawings]

FIGS. 1 and 2 illustrate a structure of a battery pack of the related art.
FIG. 3 illustrates a cross-section of the battery pack of FIG. 1.
FIGS. 4 and 5 illustrate a structure of a battery pack according to an exemplary embodiment of the present invention.
FIG. 6 illustrates a cross-section of a lower case according to an exemplary embodiment of the present invention in a state in which a first nut and a first bolt are mounted thereon.
FIG. 7 illustrates a sealing member coupled to a lower case according to an exemplary embodiment of the present invention.
FIG. 8 illustrates a cross-section of a battery pack according to an exemplary embodiment of the present invention and a sealing structure thereof.
FIG. 9 illustrates another cross-section of the battery pack according to an exemplary embodiment of the present invention and the sealing structure thereof.

### <Explanation of Reference Numerals and Symbols>

1: battery pack
11: upper case
12: lower case
13: sealing member
130: coupling hole
131: coupling member
14: fastening member
B: bolt
N: nut
2: battery pack
21: upper case
210: edge portion
22: lower case
220: edge portion
23: sealing member
230: coupling hole
231: first sealing rib
232: second sealing rib
24: fastening member
240: connection portion
241: coupling protrusion
242: fixing portion
N1: first nut
N2: second nut
B1: first bolt
B2: second bolt

### [Mode for Invention]

Hereinafter, preferred exemplary embodiments of the present invention will be described in detail with reference to the accompanying drawings.

The present invention is not limited to the exemplary embodiments disclosed below, but may be modified in various manners and implemented in various different forms. The exemplary embodiments are merely provided to complete the disclosure of the present invention and to fully convey the scope of the invention to one skilled in the art. Therefore, it should be understood that the present invention is not limited to the exemplary embodiments disclosed below, but the configuration of any one exemplary embodiment and the configuration of another exemplary embodiment can be substituted or added, and the present invention includes all alterations, equivalents, and alternatives that are included in the technical spirit and scope of the present invention.

It should be interpreted that the accompanying drawings are provided only to allow those skilled in the art to easily understand the exemplary embodiments disclosed in the present specification, and the technical spirit disclosed in the present specification is not limited by the accompanying drawings, and includes all alterations, equivalents, and alternatives that are included in the spirit and the technical scope of the present invention. In the drawings, sizes or thicknesses of components may be exaggerated, increased, or decreased for ease of understanding, but the protection scope of the present invention should not be restrictively construed.

The terms used in the present specification are used only for the purpose of describing particular implementations or exemplary embodiments and are not intended to limit the present invention. Further, singular expressions include plural expressions unless clearly described as different meanings in the context. In the present application, the terms "comprises," "comprising," "includes," "including," "containing," "has," "having", and other variations thereof are inclusive and therefore specify the presence of features, integers, steps, operations, components, parts, and/or combinations thereof disclosed in the specification. That is, in the present application, the terms "comprises," "comprising," "includes," "including," "containing," "has," "having", and other variations thereof do not preclude the possibility of the presence or addition of one or more other features, integers, steps, operations, components, parts, and/or combinations thereof.

The terms including ordinal numbers such as "first," "second," and the like may be used to describe various components, but the components are not limited by the terms. The terms are used only to discriminate one component from another component.

When one component is described as being "coupled" or "connected" to another component, it should be understood that one component may be coupled or connected directly to another component, and an intervening component may also be present between the components. On the other hand, when one component is described as being "coupled directly to" or "in direct contact with" another component, it should be understood that no intervening component is present between the components.

When one component is described as being "above" or "below" another component, it should be understood that one component may be arranged directly on another component, and an intervening component may also be present between the components.

Unless otherwise defined, all terms used herein, including technical or scientific terms, have the same meanings as commonly understood by those skilled in the art to which the present invention pertains. Terms, such as those defined in commonly used dictionaries, should be interpreted as having meanings consistent with meanings in the context of related technologies and should not be interpreted as ideal or overly formal meanings unless explicitly defined in the present application.

Although the present exemplary embodiment illustrates a sealing structure of a battery pack case including an upper case and a lower case, it will be appreciated from the following description that the solution to the problems of the present invention may be applied, for sealing, not only to such a battery pack case but also to a case constituted by coupling two or more members.

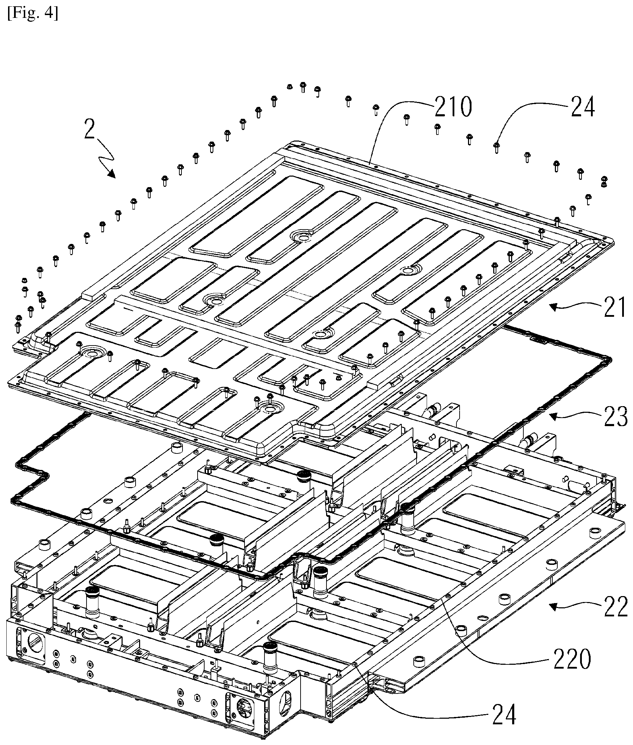

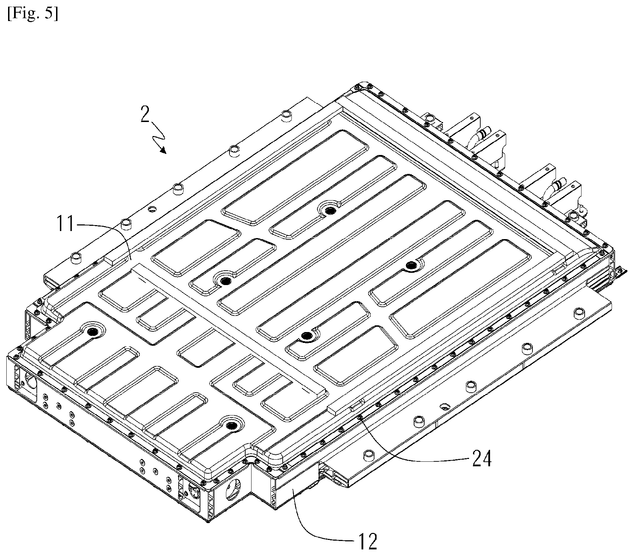

FIGS. 4 and 5 illustrate a structure of a battery pack according to an exemplary embodiment of the present invention. Referring to these drawings, a battery pack 2 according to an exemplary embodiment of the present invention may include a case that accommodates one or more battery cells and/or battery modules. The case may include an upper case 21 and a lower case 22.

The upper case 21 and the lower case 22 may be coupled as edge portions 210 and 220 thereof are fastened to each other.

The edge portions may each be in the form of a flange extending outward from an edge of the corresponding case. The edge portion of the upper case and the edge portion of the lower case may respectively include coupling surfaces facing each other in an upper-lower direction and rear surfaces opposite to the coupling surfaces.

For convenience of description, the edge portion of the upper case is referred to as an upper edge portion, the coupling surface of the upper edge portion is referred to as an upper coupling surface, the rear surface of the upper edge portion is referred to as an upper rear surface, and a hole formed in the upper edge portion is referred to as an upper hole. Likewise, the edge portion of the lower case is referred to as a lower edge portion, the coupling surface of the lower edge portion is referred to as a lower coupling surface, the rear surface of the lower edge portion is referred to as a lower rear surface, and a hole formed in the lower edge portion is referred to as a lower hole.

A sealing member 23 for sealing the upper case 21 and the lower case 22 therebetween may be interposed between the edge portions 210 and 220. The sealing member may be a closed loop-shaped member extending along the edge portions 210 and 220 and may be made of a compressible material.

The sealing member 23 has an upper surface and a lower surface respectively facing the coupling surfaces of the two cases.

The upper case 21 and the lower case 22 may be coupled through a fastening member 24 that fastens the edge portions 210 and 220 thereof. Accordingly, the sealing member 23 may seal the coupling surface of the edge portion of the upper case 21 and the coupling surface of the edge portion of the lower case 22 therebetween by being pressed and compressed between the edge portions 210 and 220.

For convenience of description, a direction in which the upper edge portion and the lower edge portion are brought into close contact with each other by the fastening member is referred to as a fastening direction or an axial direction, a direction around the axis is referred to as a circumferential direction, and a direction toward or away from the axis is referred to as a radial direction.

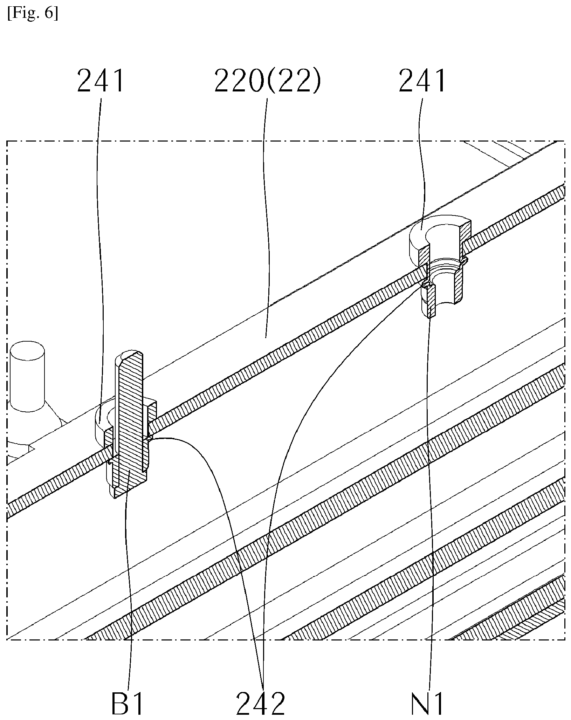

FIG. 6 illustrates a cross-section of a lower case according to an exemplary embodiment of the present invention in a state in which a first nut and a first bolt are mounted thereon. Referring to this drawing, the lower case 22 may be provided with a coupling protrusion 241 further protruding toward the upper case 21 with respect to the edge portion 220 of the lower case 22. The coupling protrusion 241 may be integrally provided with the lower case 22 or may be mounted as a separate member. In addition, the coupling protrusion 241 may be included in the fastening member 24 or may be provided separately therefrom.

A first nut N1 may be provided at the edge portion 220 of the lower case 22. The first nut N1 may be formed as one member with the lower case 22 or may be a separate member mounted on the lower case 22. In this case, the coupling protrusion 241 may be included in the first nut N1.

According to an exemplary embodiment of the present invention, the first nut N1 may be a separate nut mounted on the edge portion 220 of the lower case 22. In this case, the first nut N1 may include a fixing portion 242, and the first nut N1 may be fixed to the lower case 22 with the lower case 22 interposed between the coupling protrusion 241 and the fixing portion 242.

According to an exemplary embodiment of the present invention, the first nut N1 may be implemented as a nut that is inserted into an object to be fixed and then compressed and deformed to be fixed to the object. To this end, the first nut N1 according to an exemplary embodiment of the present invention may include the fixing portion 242 that is compressed and deformed after passing through the lower case 22.

As the first nut N1 is fixed to the lower case 22, a process of aligning the fastening member 24 to precise positions on the lower case 22 and the upper case 21 may be omitted.

In a preferred exemplary embodiment, the coupling protrusion 241 is arranged on the lower coupling surface so as to protrude upward beyond the lower coupling surface, and the first nut N1 is arranged below the lower rear surface. Then, the coupling protrusion 241 and the first nut N1 are connected to each other through a tubular connecting portion 240 passing through the lower edge portion 220 via a lower hole.

When viewed in the axial direction, a coupling protrusion cross-section defined by an outer periphery of the coupling protrusion 241 is larger than a lower hole cross-section defined by an inner periphery of the lower hole. In addition, a first nut cross-section defined by an outer periphery of the first nut N1 is smaller than the lower hole cross-section. Further, a connecting portion cross-section defined by an outer periphery of the connecting portion 240 is slightly smaller than, and substantially equal to, the lower hole cross-section.
The first nut N1 and the connecting portion 240 may be inserted from an upper side of the lower edge portion 220 through the lower hole such that a bottom surface of the coupling protrusion 241 comes into contact with the lower coupling surface. In this case, the coupling protrusion 241 may be aligned with the lower hole very simply and accurately by guidance of an inner peripheral surface of the lower hole and an outer peripheral surface of the connecting portion 240.

Next, while pressing the coupling protrusion 241 downward, the first nut N1 is pulled upward through the lower hole. Then, since a section of the connecting portion 240 provided between the lower rear surface and the first nut N1 in the axial direction has lower rigidity than the first nut N1, the section is buckled and deformed radially outward, thereby forming a fixing portion 242 having an expanded outer diameter.

Accordingly, while the alignment state of the coupling protrusion 241 for alignment of the sealing member 23 is maintained as it is, the first nut N1 can be simply fixed to the lower edge portion 220.

In comparison with the coupling protrusion 241, the first nut N1 need not be strictly aligned with respect to the lower hole. If inner diameters of the lower hole and the upper hole are set to be larger than an inner diameter of a tapped hole of the first nut N1, a slight alignment error can be sufficiently accommodated.

Meanwhile, the edge portion 220 of the lower case 22 may be provided with a first bolt B1 extending so as to pass through the upper case 21. The first bolt B1 may be formed as one member with the lower case 22 or may be a separate member mounted on the lower case 22. In this case, the coupling protrusion 241 may be included in the first bolt B1.

According to an exemplary embodiment of the present invention, the first bolt B1 may be a separate bolt mounted on the edge portion 220 of the lower case 22. In this case, the first bolt B1 may include the fixing portion 242, and the first bolt B1 may be fixed to the lower case 22 with the lower case 22 interposed between the coupling protrusion 241 and the fixing portion 242.

According to another exemplary embodiment of the present invention, the first bolt B1 may be implemented as a bolt that is inserted into an object to be fixed and then compressed and deformed to be fitted to the object. To this end, the first bolt B1 according to an exemplary embodiment of the present invention may include the fixing portion 242 that is compressed and deformed after passing through the lower case 22.

As the first bolt B1 is fixed to the lower case 22, a process of aligning the fastening member 24 to precise positions on the lower case 22 and the upper case 21 may be omitted.

In a preferred exemplary embodiment, the coupling protrusion 241 is arranged on the lower coupling surface so as to protrude upward beyond the lower coupling surface, and the first bolt B1 is arranged below the lower rear surface. Then, the coupling protrusion 241 and the first bolt B1 are connected to each other through the connecting portion 240 passing through the lower edge portion 220 via the lower hole. A lower end portion of the connecting portion 240 is connected to a head of the first bolt B1.

When viewed in the axial direction, a coupling protrusion cross-section is larger than a lower hole cross-section, a head cross-section defined by an outer periphery of the head of the first bolt B1 is smaller than the lower hole cross-section, and a connecting portion cross-section is slightly smaller than, and substantially equal to, the lower hole cross-section.

The head of the first bolt B1 and the connecting portion 240 may be inserted from an upper side of the lower edge portion 220 through the lower hole such that a bottom surface of the coupling protrusion 241 comes into contact with the lower coupling surface. In this case, the coupling protrusion 241 may be aligned with the lower hole very simply and accurately by guidance of an inner peripheral surface of the lower hole and an outer peripheral surface of the connecting portion 240.

Next, while pressing the coupling protrusion 241 downward, the head of the first bolt B1 is pulled upward through the lower hole. Then, since a section of the connecting portion 240 provided between the lower rear surface and the head of the first bolt B1 in the axial direction has lower rigidity than the head of the first bolt, the section is buckled and deformed radially outward, thereby forming the fixing portion 242 having an expanded outer diameter.

Accordingly, while the alignment state of the coupling protrusion 241 for alignment of the sealing member 23 is maintained as it is, the first bolt B1 can be simply fixed to the lower edge portion 220.

In comparison with the coupling protrusion 241, the first bolt B1 need not be strictly aligned with respect to the lower hole. If the inner diameters of the lower hole and the upper hole are set to be larger than an outer diameter of a threaded portion of the first bolt B1, a slight alignment error can be sufficiently accommodated.

The battery pack 2 may include at least one of the first nut N1 and the first bolt B1. Preferably, the battery pack 2 according to an exemplary embodiment of the present invention includes both the first nut N1 and the first bolt B1.

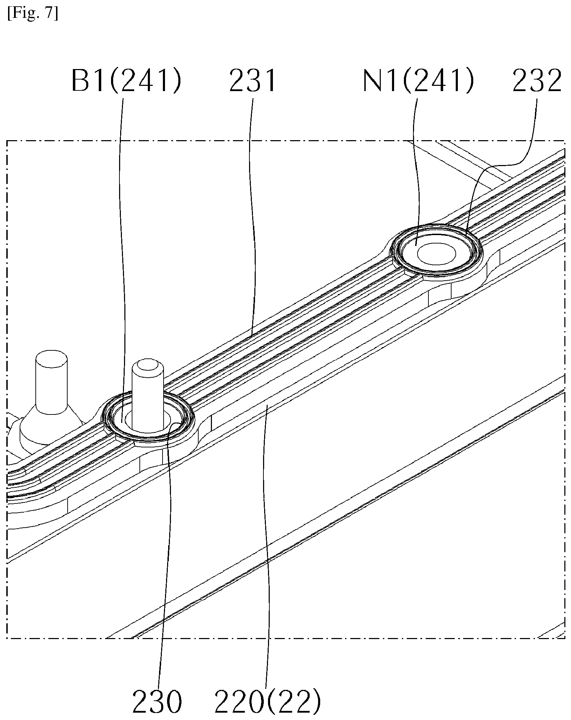

FIG. 7 illustrates a sealing member coupled to a lower case according to an exemplary embodiment of the present invention. Referring to this drawing, the sealing member 23 may be provided with a coupling hole 230 into which the coupling protrusion 241 is fitted. The coupling hole 230 may be provided to correspond to the coupling protrusion 241 of the first nut N1 and/or the first bolt B1 provided along the edge portion 220 of the lower case 22, and may be repeatedly arranged at predetermined intervals along an extension direction of the sealing member 23.

According to the present exemplary embodiment, the sealing member 23 may be mounted at an appropriate position on the lower case 22 by the coupling protrusion 241 being fitted into the coupling hole 230. Accordingly, a separate member for aligning the position of the sealing member 23 with respect to the lower case 22 is not required, and the sealing member 23 can be mounted at a precise position even before fastening between the upper case 21 and the lower case 22.

The sealing member 23 may include a first sealing rib 231. The first sealing rib 231 may have a predetermined width and extend along the extension direction of the sealing member 23, and may protrude from an upper surface and/or a lower surface of the sealing member 23 in one or both directions of a thickness direction thereof.

The first sealing rib 231 may be provided in plurality. The plurality of first sealing ribs 231 may be arranged spaced apart from each other in a width direction, and both end portions thereof in a longitudinal direction may be connected to second sealing ribs 232 to be described below, respectively. In the exemplary embodiment, an example is illustrated in which three first sealing ribs 231 are provided.

The sealing member 23 may include a second sealing rib 232. The second sealing rib 232 may have a predetermined width and extend around the coupling hole, and may protrude from the upper surface and/or the lower surface of the sealing member 23 in one or both directions of a thickness direction thereof.

The second sealing rib 232 may be provided in plurality. The plurality of second sealing ribs 232 may be concentrically aligned with each other, and arranged spaced apart from each other in the radial direction. The outermost second sealing rib 232 is connected to the first sealing rib 231. In the exemplary embodiment, an example is illustrated in which two second sealing ribs 232 are provided.

In the sealing member 23, it is preferable that a width of a portion at which the coupling hole 230 is provided is greater than that of the remaining portion. Accordingly, the sealing member 23 may not unnecessarily require volume and material.

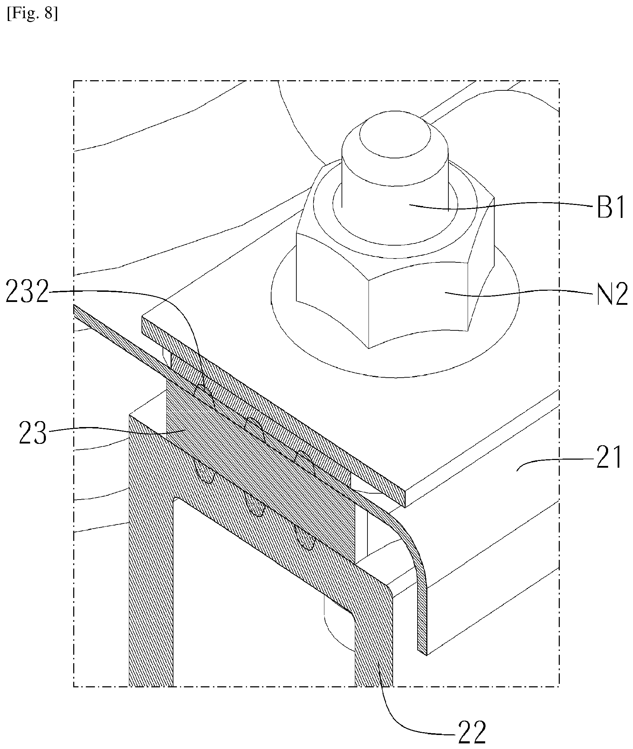

FIG. 8 illustrates a cross-section of a battery pack according to an exemplary embodiment of the present invention and a sealing structure thereof. Referring to this drawing, the upper case 21 and the lower case 22 may be fastened by the first bolt B1 passing through the lower hole, the coupling protrusion, and the upper hole, and the second nut N2 engaged with the first bolt B1 on the upper rear surface of the upper case 21. Accordingly, the sealing member 23 may be pressed by the upper coupling surface and the lower coupling surface between the edge portions 210 and 220, thereby sealing the upper edge portion 210 of the upper case 21 and the lower edge portion 220 of the lower case 22 therebetween.

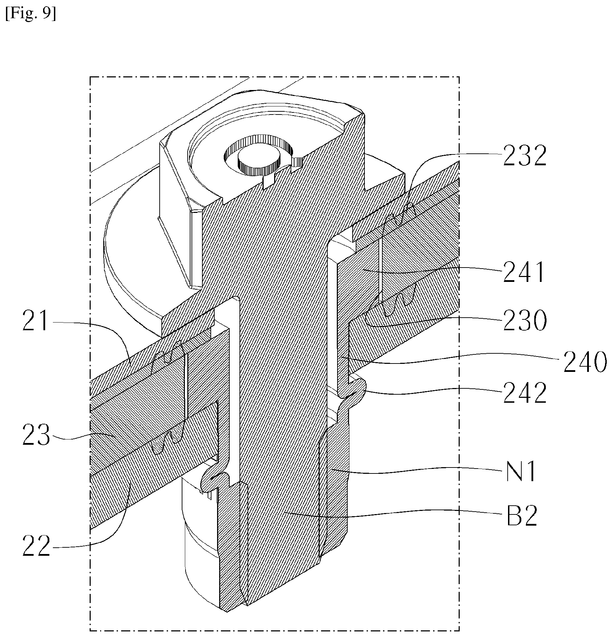

FIG. 9 illustrates another cross-section of the battery pack according to an exemplary embodiment of the present invention and the sealing structure thereof. Referring to this drawing, the upper case 21 and the lower case 22 may be fastened by the first nut N1 arranged on the lower rear surface and the second bolt B2 passing through the lower hole, the coupling protrusion, and the upper hole from an upper side of the upper case 21, and engaged with the first nut N1. Accordingly, the sealing member 23 may be pressed by the upper coupling surface and the lower coupling surface between the edge portions 210 and 220, thereby sealing the upper edge portion 210 of the upper case 21 and the lower edge portion 220 of the lower case 22 therebetween.

The first sealing rib 231 and the second sealing rib 232 may be compressed while being in direct contact with the edge portions 210 and 220 of the upper case 21 and the lower case 22. Accordingly, the sealing member 23 may be compressed under a higher pressure over a smaller area, and may more strongly seal the upper case 21 and the lower case 22 therebetween and the upper case 21, the lower case 22, and/or the fastening member 24 therebetween.

The first sealing rib 231 and the second sealing rib 232 may include a tapered shape having a width that decreases toward an outer side in the thickness direction, and thus may be formed to be pressed over a narrower area.

In addition, the first sealing rib 231 and the second sealing rib 232 are provided in plurality, respectively. Accordingly, sealing of the battery pack 2 may be achieved in a stable and multiple manner.

While the present invention has been described above with reference to the accompanying drawings, the present invention is not limited to the drawings and the exemplary embodiments disclosed in the present specification, and it is apparent that the present invention may be variously modified by those skilled in the art without departing from the technical spirit of the present invention. Further, even though the operational effects of the configurations of the present invention have not been explicitly disclosed and described in the description of the exemplary embodiments of the present invention, the effects, which can be expected by the corresponding configurations, should, of course, be acceptable.

## Claims

1. A battery pack comprising:
a first case comprising a first edge portion provided with a first coupling surface;
a second case comprising a second edge portion provided with a second coupling surface facing the first coupling surface;
a sealing member interposed under compression between the first coupling surface and the second coupling surface facing each other, and configured to seal a coupling portion between the first edge portion and the second edge portion; and
a fastening member configured to fasten the first edge portion and the second edge portion in a direction in which the first edge portion and the second edge portion are brought into close contact with each other, wherein
the fastening member comprises:
a coupling protrusion fixed to the first edge portion, arranged on the first coupling surface side to protrude from the first coupling surface, and aligned with a first hole of the first edge portion;
a nut fixed to the first edge portion and aligned with the first hole; and
a bolt passing through the coupling protrusion and the first hole and engaged with the nut, and
the sealing member comprises a coupling hole into which the coupling protrusion is fitted, the coupling hole having an inner peripheral surface in contact with an outer peripheral surface of the coupling protrusion.

2. The battery pack of claim 1, wherein
the nut is arranged on a first rear surface side of the first edge portion opposite to the first coupling surface, and
the coupling protrusion is connected to the nut through the first hole.

3. The battery pack of claim 2, wherein the nut and the coupling protrusion are connected to each other by a connecting portion passing through the first hole.

4. The battery pack of claim 3, wherein the connecting portion comprises a fixing portion arranged between the first rear surface of the first edge portion and the nut and expanding radially outward.

5. The battery pack of claim 4, wherein a cross-section defined by an outer periphery of the fixing portion is larger than a cross-section defined by an inner periphery of the first hole.

6. The battery pack of claim 4, wherein the fixing portion is defined by an axially compressed and deformed portion of a connecting portion section arranged between the nut and the first edge portion.

7. The battery pack of claim 1, wherein a cross-section defined by an outer periphery of the coupling protrusion is larger than a cross-section defined by an inner periphery of the first hole.

8. The battery pack of claim 1, wherein a cross-section defined by an outer periphery of the nut is smaller than a cross-section defined by an inner periphery of the first hole.

9. The battery pack of claim 1, wherein the bolt passes through a second hole of the second edge portion, and a head of the bolt is arranged on a second rear surface side of the second edge portion opposite to the second coupling surface.

10. A battery pack comprising:
a first case comprising a first edge portion provided with a first coupling surface;
a second case comprising a second edge portion provided with a second coupling surface facing the first coupling surface;
a sealing member interposed under compression between the first coupling surface and the second coupling surface facing each other, and configured to seal a coupling portion between the first edge portion and the second edge portion; and
a fastening member configured to fasten the first edge portion and the second edge portion in a direction in which the first edge portion and the second edge portion are brought into close contact with each other, wherein
the fastening member comprises:
a coupling protrusion fixed to the first edge portion and arranged on the first coupling surface side to protrude from the first coupling surface;
a bolt fixed to the first edge portion, aligned with the coupling protrusion, and passing through a second hole of the second edge portion; and
a nut arranged on a second rear surface side of the second edge portion opposite to the second coupling surface and configured to engage with the bolt, and
the sealing member comprises a coupling hole into which the coupling protrusion is fitted, the coupling hole having an inner peripheral surface in contact with an outer peripheral surface of the coupling protrusion.

11. The battery pack of claim 10, wherein
a head of the bolt is arranged on a first rear surface side of the first edge portion opposite to the first coupling surface, and
the coupling protrusion is connected to the head of the bolt through the first hole.

12. The battery pack of claim 11, wherein the head and the coupling protrusion are connected to each other by a connecting portion passing through the first hole.

13. The battery pack of claim 12, wherein the connecting portion comprises a fixing portion arranged between the first rear surface of the first edge portion and the head and expanding radially outward.

14. The battery pack of claim 13, wherein a cross-section defined by an outer periphery of the fixing portion is larger than a cross-section defined by an inner periphery of the first hole.

15. The battery pack of claim 14, wherein the fixing portion is defined by an axially compressed and deformed portion of a connecting portion section arranged between the head and the first edge portion.

16. The battery pack of claim 10, wherein a cross-section defined by an outer periphery of the coupling protrusion is larger than a cross-section defined by an inner periphery of a first hole of the first edge portion.

17. The battery pack of claim 10, wherein a cross-section defined by an outer periphery of a head of the bolt is smaller than a cross-section defined by an inner periphery of a first hole of the first edge portion.

18. The battery pack of claim 10, wherein the bolt passes through a first hole of the first edge portion and the coupling protrusion.

19. The battery pack of any one of claims 1 to 18, wherein
the sealing member comprises:
a first sealing rib protruding from at least one of a first surface facing the first coupling surface and a second surface facing the second coupling surface and extending along a longitudinal direction of the sealing member; and
a second sealing rib protruding from at least one of the first surface and the second surface and extending in a closed-loop form along a periphery of the coupling hole, and
an end portion of the first sealing rib in the longitudinal direction is connected to the second sealing rib.
